# DEMANDE DE BREVET EUROPEEN

(11) **EP 2 503 670 A1**
(43) Date de publication de la demande: **26.09.2012**
(21) Numéro de dépôt: 12160974.7
(22) Date de dépôt: 23.03.2012
(51) Int. Cl.: H02K 1/18

(54) **Assemblage de tôles magnétiques pour machines électromagnétiques, l'assemblage étant pourvu de moyens de fixation et procédé de fabrication d'un tel assemblage de tôles**

(30) Priorité: 25.03.2011 FR 1152512
(71) Demandeur: R. BOURGEOIS (société anonyme), 25000 Besancon (FR)
(72) Inventeur: Bourgeois, Raymond Nicolas, 25870 AUXON DESSUS (FR)
(74) Mandataire: Lavialle, Bruno François Stéphane

(57) **Abrégé**

Paquet de tôles pourvu de moyens de fixation, caractérisé en ce qu'au moins une partie des tôles présentent une découpe pour former un logement recevant un insert pourvu des moyens de fixation et ayant un axe de fixation, le logement ayant au moins une paroi coopérant avec une surface extérieure de l'insert pour retenir l'insert.

Procédé de fabrication d'un tel paquet.

## Description

La présente invention concerne un assemblage de tôles pourvu de moyens de fixation et un procédé de fabrication d'un tel assemblage de tôles.

Ce type d'assemblage de tôles (ou paquet de tôle) est plus particulièrement destiné à être utilisé pour la réalisation d'armatures de machines électromagnétiques, et par exemple un stator ou un rotor d'alternateur ou de moteur, des armatures de transformateurs...

Traditionnellement, un tel paquet est réalisé à partir d'une bande de tôle dans laquelle sont découpées les tôles destinées à former le paquet de tôles. Les tôles sont découpées au moyen d'un outillage comportant des poinçons qui sont activés ou désactivés pour former des ouvertures différentes selon les tôles. Les tôles ainsi découpées sont empilées les unes contre les autres et fixées les unes aux autres par soudage, rivetage, agrafage ou interlocking (engagement mutuel d'éléments emboutis en correspondance dans des tôles adjacentes), clavetage...

Plusieurs modes de réalisation des moyens de vissage sont possibles.

Selon un premier mode de réalisation, un taraudage est réalisé directement dans le paquet de tôles. Or, la structure hétérogène du paquet de tôles entraîne des contraintes d'usinage aboutissant à des tolérances de fabrication relativement importantes et une usure des outils. En outre, ceci nécessite une reprise d'usinage sur le paquet de tôles formé.

Selon un deuxième mode de réalisation, un taraudage est réalisé en rapportant par soudure un écrou sur le paquet de tôles. L'implantation en surface de l'écrou impose des contraintes sur les conceptions possibles des paquets de tôles. Ce mode de fixation nécessite en outre lui aussi une reprise d'usinage pénalisant la productivité.

Les mêmes difficultés se posent avec d'autres types de fixation comme les fixations par des anneaux élastiques qui nécessitent que des pions soient fixés sur le paquet de tôles. Un tel pion est destiné à être engagé dans une ouverture d'un bâti et pourvu d'un anneau élastique empêchant son retrait de l'ouverture.

Un but de l'invention est de fournir des paquets de tôles pourvus de moyens de fixation, qui soient simples de fabrication et d'implantation.

A cet effet, on prévoit, selon l'invention, un assemblage de tôles magnétiques pour machine électromagnétique, l'assemblage étant pourvu de moyens de fixation d'un élément externe. Au moins une partie des tôles présente une découpe pour former un logement recevant un insert pourvu des moyens de fixation et ayant au moins un axe de fixation, le logement étant agencé pour retenir l'insert dans l'assemblage.

Par axe de fixation, on désigne la direction selon laquelle l'assemblage de tôles est retenu par rapport à une autre pièce ou une pièce est retenue par rapport à l'assemblage de tôles. L'élément externe peut être un support sur lequel l'assemblage est destiné à être rapporté ou une pièce rapportée sur l'assemblage. Ainsi, avec l'invention, les moyens de fixation sont agencés sur un insert rapporté, dont la fixation à l'assemblage de tôles est assurée par des découpes réalisées dans certaines des tôles. En outre, l'insert est complètement intégré dans l'assemblage de tôles. La retenue de l'insert sur l'assemblage permet une manipulation de l'assemblage sans risque de perte de l'insert qui est de préférence maintenu dans sa position de fixation. La résistance de l'insert à un effort d'extraction selon la direction de fixation est assurée par au moins une paroi du logement coopérant avec une surface extérieure de l'insert pour s'opposer à l'effort d'extraction de l'insert selon la direction de fixation.

L'invention a également pour objet un procédé de fabrication d'un assemblage de tôles magnétiques pour machine électromagnétique, pourvu de moyens de fixation, l'assemblage de tôles étant formé par empilement de tôles pour former l'assemblage de tôles, le procédé comprenant les étapes de :
- réaliser, préalablement à l'empilement, dans au moins une partie des tôles, une découpe pour y former une portion de logement, et
- commencer à empiler les tôles découpées pour former le logement en y disposant un insert pourvu des moyens de fixation, l'insert ayant un axe de fixation,
- empiler le reste des tôles pour fermer au moins partiellement le logement,

le logement ayant au moins une paroi coopérant avec une surface extérieure de l'insert pour retenir l'insert selon la direction de fixation.

Ce procédé de fabrication est particulièrement bien adapté, tant techniquement qu'économiquement, à la réalisation d'un paquet de tôles pourvu de moyens de fixation.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue éclatée et en perspective d'un assemblage de tôles selon un premier mode de réalisation,
- la figure 2 est une vue éclatée et en perspective d'un assemblage de tôles selon un deuxième mode de réalisation,
- la figure 3 est une vue éclatée et en perspective d'un assemblage de tôles selon un troisième mode de réalisation

- la figure 4 est une vue en perspective d'un second type de moyens de fixation,
- la figure 5 est une vue en perspective d'un troisième type de moyens de fixation.

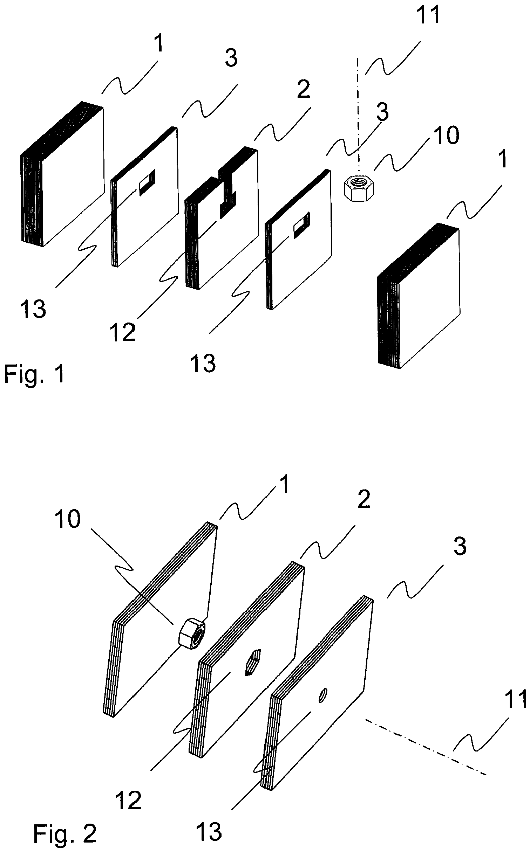

En référence aux figures 1 à 3, l'invention concerne un assemblage de tôles, ci-après paquet de tôles, comportant des tôles 1, 2, 3 magnétiques assemblées par un procédé quelconque tel que le soudage, le rivetage, l'agrafage ou interlocking (engagement mutuel d'éléments, une languette et une ouverture par exemple, emboutis en correspondance dans des tôles adjacentes), le clavetage... et intégrant des moyens de vissage. Par moyens de vissage, on entend tout composant agencé pour coopérer par vissage avec un autre composant. Ces moyens de vissage permettent soit de fixer le paquet de tôles sur un bâti ou un autre appareil, soit de fixer sur le paquet de tôles un composant, un carter ou un autre appareil.

Un tel paquet est réalisé à partir d'une bande de tôle dans laquelle sont découpées les tôles destinées à former le paquet de tôles. Les tôles sont découpées au moyen d'une presse pourvue d'un outillage comportant des poinçons qui sont activés ou désactivés pour former le contour extérieur de chaque tôle et éventuellement des ouvertures destinées à former un puits ou un alésage dans le paquet de tôles, une fois les tôles assemblées. L'outillage assure également l'empilement des tôles découpées.

Le principe de l'invention repose sur la réalisation d'une cavité ou logement dans le paquet de tôles pour y accueillir tout ou partie d'un insert formant les moyens de vissage. Les tôles non pourvues d'ouverture ou pourvues d'une ouverture plus petite que la section de l'insert en regard vont assurer la retenue de l'insert dans le paquet de tôles.

Dans le premier mode de réalisation et le deuxième mode de réalisation, les moyens de vissage sont formés d'un écrou 10 ayant un axe de vissage 11 et présentant, transversalement à l'axe de vissage 11, une section ici de forme hexagonale. Il va de soi que cette section peut avoir une autre forme qui ne soit pas de révolution.

Dans le premier mode de réalisation, une partie des tôles, à savoir les tôles 2, comportent une découpe 12 ayant un contour ouvert en forme de T ayant une barre accueillant l'écrou 10 et une jambe débouchant sur un bord de la tôle pour former un puits coïncidant avec l'axe de vissage 11 en regard de l'écrou 10 de manière à permettre le passage d'une vis. L'axe de vissage 11 s'étend parallèlement aux tôles.

Chaque tôle 3 comporte une découpe 13, ayant un contour formé de forme rectangulaire, réalisée en pleine tôle à distance des bords de la tôle 3.

Les découpes 12, 13 des tôles 2 et 3 forment chacune des portions de logement de telle manière que les tôles 2, 3 assemblées les unes aux autres délimitent un logement pour l'écrou 10, logement fermé par les tôles 1 qui sont dépourvues de découpes.

De préférence, le logement présente, transversalement à l'axe de vissage 11, une section rectangulaire ayant une longueur légèrement supérieure à la distance séparant les sommets les plus éloignés de l'écrou et une largeur légèrement supérieure à la distance minimale séparant les faces parallèles de l'écrou 10. Le logement est réalisé de telle manière que les tôles 1 s'étendent parallèlement aux faces parallèles de l'écrou 10 les plus proches l'une de l'autre et bloquent ainsi la rotation de l'écrou 10 autour de l'axe de vissage 11.

En variante, les dimensions des ouvertures peuvent être telles que leurs bords enserrent au plus près l'écrou 10 de manière à immobiliser l'écrou 10 en rotation autour de l'axe de vissage 11.

Les ouvertures 12, 13 présentent ici toutes un bord s'étendant perpendiculairement à l'axe de vissage 11 pour retenir l'écrou 10 en s'opposant à un effort d'extraction de celui-ci selon l'axe de vissage 11.

Ainsi, les découpes 12, 13 forment un logement recevant l'écrou 10 et ayant au moins une paroi coopérant avec une surface extérieure de l'écrou pour immobiliser l'écrou 10 en rotation autour de l'axe de vissage 11 et pour retenir l'écrou 10 selon l'axe de vissage 11.

De préférence, le logement a des dimensions autorisant un jeu transversal de l'écrou 10 dans le logement pour faciliter le montage ultérieur de l'élément fixé par vissage.

A titre d'exemple, pour un écrou 10 de type M24, le jeu sera de 1 mm au rayon.

Le logement peut également être agencé pour autoriser un jeu de l'écrou 10 dans le sens axial.

Dans le deuxième mode de réalisation, les découpes sont agencées de telle manière que l'axe de vissage 11 de l'écrou 10 s'étende perpendiculairement aux tôles.

Dans ce mode de réalisation, les ouvertures 12 ont un contour correspondant à la forme extérieure de l'écrou 10, considéré en section transversalement à l'axe de vissage 11. Les bords des découpes 12 immobilisent l'écrou 10 en rotation autour de l'axe de vissage 11.

Les découpes 13 ont un contour circulaire d'axe coïncidant avec l'axe de pivotement 11 pour former le puits en regard de l'écrou. La découpe 13 a un diamètre inférieur à la plus grande dimension transversale de l'écrou 10. La première tôle 3 adjacente à une tôle 2 assure la retenue de l'écrou 10 le long de l'axe de vissage 11.

La première tôle 1 adjacente à une tôle 2 assure la fermeture du logement.

Dans le troisième mode de réalisation, l'insert est une vis 20 comportant une tête 21 dont la surface extérieure n'est pas une surface de révolution, et une tige 22 filetée s'étendant en saillie du paquet de tôles.

La vis 20 possède un axe de vissage 11 s'étendant ici perpendiculairement aux tôles. En variante, l'axe de vissage 11 de la vis 20 peut s'étendre parallèlement aux tôles.

L'agencement des découpes dans les tôles est identique à celui du deuxième mode de réalisation : la tête 21 est reçue dans la portion de logement formée par les découpes 12 et tige 22 est reçue dans la portion de logement formée par les découpes 13.

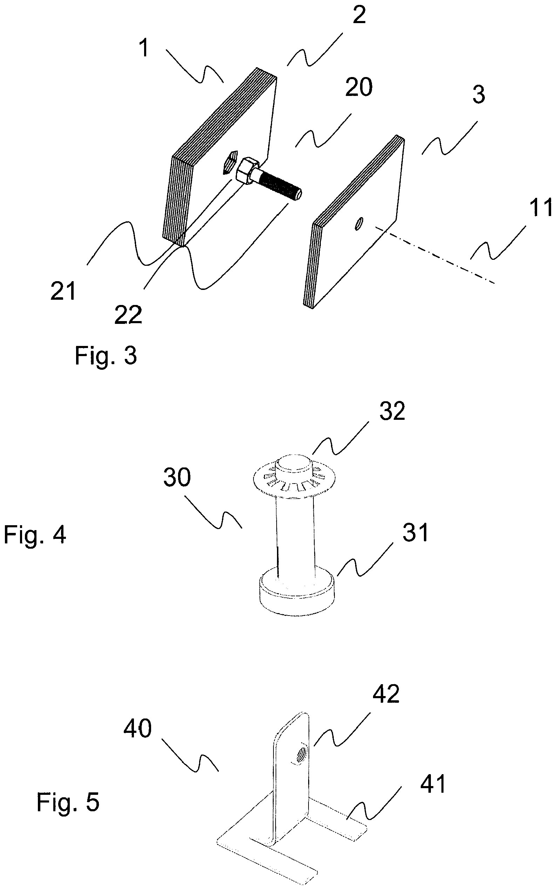

A la figure 4 est représenté un insert agencé pour former un autre type de moyens de fixation. L'insert comprend ici un pion épaulé 30 comportant une tête 31 et une tige 32 sur laquelle un anneau élastique est destiné à être engagé à force.

Le pion épaulé 30 est reçu dans un logement de même type que celui du paquet de tôles du premier mode de réalisation et du troisième mode de réalisation. Le logement est agencé pour que l'extrémité libre de la tige 32 s'étende en saillie du paquet de tôles.

A la figure 5 est représenté un insert agencé pour former encore un autre type de moyens de fixation. L'insert comprend ici une plaque 40 comportant une portion pliée 41 pour former une embase d'ancrage de l'insert dans le paquet de tôles et une portion support 42 d'un écrou. La portion pliée 41 est agencée pour être reçue dans un logement du paquet de tôles et la portion support 42 est agencée pour s'étendre en saillie du paquet de tôles lorsque la portion pliée 41 est agencée pour être reçue dans le logement du paquet de tôles.

L'axe de vissage de l'écrou s'étend perpendiculairement à la portion support 42.

Bien entendu, l'invention n'est pas limitée aux modes de réalisation décrits mais englobe toute variante entrant dans le champ de l'invention telle que définie par les revendications.

En particulier, le paquet de tôles peut comprendre un ou plusieurs inserts, ayant des axes de vissage parallèles ou non.

En outre, l'écrou ou la tête de vis peuvent avoir une surface extérieure de révolution. L'écrou ou la tête de vis peuvent alors être emmanchés à force dans le logement pour être immobilisés en rotation et en en translation ou comporter une face radiale pourvue d'un relief coopérant avec un relief de forme correspondante du logement.

Dans le premier mode de réalisation, les découpes 12 peuvent avoir un contour ouvert de forme rectangulaire débouchant sur le bord de la tôle. La retenue axiale est assurée par un bord des découpes 13 tandis que le puits a une section transversale sensiblement rectangulaire.

Les découpes 12, 13 du premier mode de réalisation peuvent accueillir une vis au lieu et place de l'écrou.

Dans le premier mode de réalisation, la barre des découpes 12 peut avoir une longueur légèrement supérieure à la distance minimale séparant deux faces parallèles de l'écrou pour assurer le blocage en rotation de l'écrou (il en résulte que l'écrou est pivoté selon un angle de 90° autour de l'axe de vissage par rapport au mode de réalisation décrit).

Il en serait de même pour le positionnement angulaire de la tête 21 de la vis 20 dans le cas où l'écrou 10 est remplacé par une vis 20 dans le premier mode de réalisation.

## Revendications

1. Assemblage de tôles magnétiques pour machine électromagnétique, l'assemblage étant pourvu de moyens de fixation d'un élément externe, **caractérisé en ce qu'**au moins une partie des tôles (2, 3) présentent une découpe (12, 13) pour former un logement recevant un insert (10) pourvu des moyens de fixation et ayant au moins un axe de fixation (11), le logement étant agencé pour retenir l'insert dans l'assemblage.

2. Assemblage selon la revendication 1, dans lequel les moyens de fixation sont des moyens de vissage et l'axe de fixation est un axe de vissage, au moins une paroi du logement coopérant avec la surface extérieure de l'insert pour immobiliser l'insert en rotation autour de l'axe de vissage et pour retenir l'insert selon l'axe de vissage.

3. Assemblage selon la revendication 2, dans lequel l'insert est un écrou (10) dont la surface extérieure n'est pas une surface de révolution, les découpes (12) formant un puits parallèle à l'axe de vissage en regard de l'écrou pour permettre le passage d'une vis.

4. Assemblage selon la revendication 3, dans lequel la découpe (12) réalisée dans certaines des tôles (2) a une forme en T ayant une jambe débouchant sur un bord de la tôle (2) et la découpe (13) réalisée dans d'autres tôles (3) a une forme rectangulaire réalisée en pleine tôle.

5. Assemblage selon la revendication 2, dans lequel l'insert est une vis (20) ayant une tête (21) dont la surface extérieure n'est pas une surface de révolution et une tige filetée (22) s'étendant en saillie de l'assemblage de tôles.

6. Assemblage selon la revendication 2, dans lequel l'insert comprend une portion d'ancrage reçue dans le logement et une portion libre qui s'étend en saillie de l'assemblage de tôles et qui est pourvue d'un écrou.

7. Assemblage selon la revendication 2, dans lequel l'axe de vissage (11) s'étend parallèlement aux tôles (1, 2, 3).

8. Assemblage selon la revendication 2, dans lequel l'axe de vissage (11) s'étend perpendiculairement aux tôles (1, 2, 3).

9. Assemblage selon la revendication 1, dans lequel les moyens de fixation comprennent un pion épaulé ayant une tête reçue dans le logement et une tige ayant une extrémité libre qui s'étend en saillie de l'assemblage de tôles.

10. Procédé de fabrication d'un assemblage de tôles magnétiques pour machine électromagnétique, l'assemblage étant pourvu de moyens de fixation, l'assemblage de tôles étant formé par empilement de tôles (1, 2, 3) pour former l'assemblage de tôles, le procédé comprenant les étapes de :
- réaliser, préalablement à l'empilement, dans au moins une partie des tôles (2, 3), une découpe (12, 13) pour y former une portion de logement, et
- commencer à empiler les tôles (2, 3) découpées pour former le logement en y disposant un insert (10) pourvu des moyens de fixation, l'insert ayant un axe de fixation (11),
- empiler le reste des tôles pour fermer au moins partiellement le logement, le logement ayant au moins une paroi coopérant avec une surface extérieure de l'insert pour retenir l'insert selon la direction de fixation.

11. Procédé selon la revendication 10, dans lequel les moyens de fixation sont des moyens de vissage et l'axe de fixation est un axe de vissage, la paroi du logement coopérant avec la surface extérieure de l'insert pour immobiliser l'insert en rotation autour de l'axe de vissage et pour retenir l'insert selon l'axe de vissage.

12. Procédé selon la revendication 10, dans lequel l'insert est un écrou (10) dont la surface extérieure n'est pas une surface de révolution, les découpes (12) sont agencées de manière à délimiter un puits parallèles à l'axe de vissage en regard de l'écrou pour permettre le passage d'une vis.

13. Procédé selon la revendication 12, dans lequel la découpe (12) est réalisée dans certaines des tôles (2) pour avoir une forme en T ayant une jambe débouchant sur un bord de la plaque et la découpe (13) est réalisée dans d'autres tôles (3), en pleine tôle, pour avoir une forme rectangulaire.

14. Procédé selon la revendication 10, dans lequel l'insert est une vis (20) ayant une tête (21) dont la surface extérieure n'est pas une surface de révolution et une tige filetée (22) s'étendant en saillie du paquet de tôles.

15. Procédé selon la revendication 10, dans lequel le logement est agencé et l'insert y est monté de telle manière que l'axe de vissage (11) s'étende parallèlement aux tôles.

16. Procédé selon la revendication 10, dans lequel le logement est agencé et l'insert y est monté de telle manière que l'axe de vissage (11) s'étende perpendiculairement aux tôles.

17. Procédé selon la revendication 10, dans lequel l'insert comprend une portion d'ancrage reçue dans le logement et une portion libre qui s'étend en saillie de l'assemblage de tôles et qui est pourvue d'un écrou.

18. Procédé selon la revendication 10, dans lequel les moyens de fixation comprennent un pion épaulé ayant une tête reçue dans le logement et une tige ayant une extrémité libre qui s'étend en saillie de l'assemblage de tôles.
